# EUROPÄISCHE PATENTANMELDUNG

(11) **EP 1 136 109 A2**
(43) Veröffentlichungstag der Anmeldung: **26.09.2001**
(21) Anmeldenummer: 01105400.4
(22) Anmeldetag: 12.03.2001
(51) Int. Cl.: B01D 21/00

(54) **Vorrichtung zum Herstellen eines Massivstoff oder Schaumstoff bildenden Reaktionsgemisches aus mindestens zwei fliessfähigen Reaktionskomponenten und gegebenenfalls Zusatzkomponenten**

(30) Priorität: 24.03.2000 DE 10014605
(71) Anmelder: Hennecke GmbH, 51379 Leverkusen (DE)
(72) Erfinder: Reintgen, Hermann-Josef, 53639 Königswinter (DE); Althausen, Ferdinand, 53819 Neunkirchen-Seelscheid (DE); Müller, Kunibert, 53757 St. Augustin (DE)
(74) Vertreter: Drope, Rüdiger, Dr.

(57) **Zusammenfassung**

Bei Vorrichtungen zum Herstellen eines Massivstoff oder Schaumstoff bildenden Reaktionsgemisches aus mindestens zwei fließfähigen Reaktionskomponenten und gegebenenfalls Zusatzkomponenten lassen sich schützenswerte Aggregate, wie Pumpen, vor Verschleiß und/oder Messgeräte, insbesondere solche mit Folgemagneten, vor Anlagerung von Eisenpartikelchen im Magnetfeld des Folgemagneten vor die Messwerte verfälschenden Ablagerungen schützen, indem ihnen ein Magnetabscheider vorgeordnet wird.

## Beschreibung

Die Erfindung betrifft eine Vorrichtung zum Konditionieren und/oder zum Herstellen eines Massivstoff oder Schaumstoff bildenden Reaktionsgemisches aus mindestens zwei fließfähigen Reaktionskomponenten und gegebenenfalls Zusatzkomponenten, bestehend aus Vorratsbehältern und einem Leitungssystem, in welchem Aggregate angeordnet sind und welches zu einem Mischkopf führt (Firmenschrift "60 HK]"; D 9902-820 3613T 00-01RMP, der Hennecke GmbH, D-53754 Sankt Augustin).

Vorrichtungen dieser Art, insbesondere mit einem Ausstoßkolben des Mischkopfes, sind hinlänglich in vielen Varianten bekannt.

In den Zuleitungen angeordnete Aggregate, wie Förderpumpen und Dosierpumpen, sind Verschleiß unterworfen. Es hat sich gezeigt, dass die zu verarbeitenden Komponenten häufig kleinste magnetische Eisenpartikel enthalten, welche offenbar als Abrieb aus chemischen Apparaten oder Anlagen bei der Herstellung oder Weiterverarbeitung dieser Komponenten anfallen.

Es ist Aufgabe der Erfindung, den durch derartige kleinste magnetische Eisenpartikelchen verursachten Verschleiß sowie Verschmutzungen von Aggregaten bei Vorrichtungen der oben genannten Art zu eliminieren.

Diese Aufgabe wird dadurch gelöst, dass in dem Leitungssystem zumindest vor einem vor Eisenpartikelchen schützenswerten Aggregat bzw. Mischkopf ein Magnetabscheider angeordnet ist.

Es ist zwar bekannt, aus Kunststoffen in fließfähigem Zustand Eisenpartikelchen auszuscheiden, um diese Kunststoffe nach dem Aushärten als Elektro-Isoliermaterial bzw. für mit Kupfer platierte Laminate einsetzen zu können (JP-A 02202424, JP-A 04363156). Auch ist es bekannt, Wasser mittels Magneten Eisenpartikelchen zu entziehen (US-A 4 836 932). Auch hier dient der Einsatz von Magneten zur Reinigung des Wassers als Endprodukt bzw. zu dessen spezieller Weiterverarbeitung.

Mit der neuen Vorrichtung lassen sich aber hinter dem Magnetabscheider im Leitungssystem angeordnete Aggregate vor Verschleiß und Ablagerungen schützen, auch wenn solche Eisenpartikelchen im Endprodukt nicht stören.

Mit dem Magnetabscheider werden magnetische Eisenpartikel dem Komponentenstrom entzogen. In angemessenen Zeitabständen lassen sich dann die Eisenpartikelchen vom Magnetabscheider entfernen. Dazu wird er vorzugsweise ausgebaut, und die Eisenpartikelchen lassen sich beispielsweise mit einem Lappen wegwischen. Es versteht sich, dass solche Reinigungsarbeiten insbesondere bei Permanentmagneten sorgfältig durchgeführt werden müssen, um infolge des Magnetismus hartnäckig anhaftende Partikelchen auch wirklich zu entfernen. Inwieweit der Schutz eines Aggregates wünschenswert ist, ist eine Ermessensfrage. Spezielle Gesichtspunkte, z.B. wie groß die Verschmutzungs- oder Verschleißgefahr ist, ob sich das betreffende Aggregat leicht und preiswert durch Austausch ersetzen lässt usw., spielen dabei eine Rolle.

Es böte sich zwar an, in das Leitungssystem Filter einzubauen; dies ist aber nicht sinnvoll, da solche Filter außerordentlich feinporig sein müssten, wodurch der Strömungswiderstand viel zu hoch würde.

Nach einer ersten Ausführungsform besteht das Leitungssystem aus einem Geradeaus-System.

Bei der Herstellung von Polyurethan-Produkten, insbesondere Schaumstoffen, werden solche seit Jahrzehnten hinlänglich bekannten, sogenannten Geradeaus-Systeme bei kontinuierlichen Prozessen eingesetzt, wo Schussanfang und Schussende keine wesentliche Rolle spielen. Der Name "Geradeaus-System" hat sich eingebürgert, weil die Komponenten von den Vorratsbehältern durch das zumindest Förderpumpen, gegebenenfalls aber auch andere Aggregate enthaltende Leitungssystem direkt in den Mischkopf gefördert, unmittelbar danach vermischt und ausgetragen werden.

Alternativ hierzu besteht das Leitungssystem aus einem Rezirkulations-System.

Dieses unterscheidet sich vom Geradeaus-System dadurch, dass die Komponenten kontinuierlich gefördert werden, wobei sie während der Pausenzeiten über den Mischkopf im Kreislauf in die Vorratsbehälter zurückgefördert werden, damit das Leitungssytem ständig unter dem Arbeitsdruck steht und am Mischkopf stets richtig konditioniertes Komponenten-Material ansteht.

Auch dieses System (siehe obige Literaturstelle) ist allgemein bekannt. Es wird bei der Polyurethan-Schaumstoffherstellung dann angewendet, wenn im "Schussbetrieb" gefahren wird, weil Schussanfang und Schussende eine wesentliche Rolle spielen.

Vorzugsweise ist der Magnetabscheider vor dem in Strömungsrichtung ersten Aggregat angeordnet.

Dadurch werden die in der betreffenden Komponente von vornherein enthaltenen Eisenpartikelchen abgeschieden, um das Aggregat vor Verschleiß oder Verschmutzung durch die Eisenpartikelchen zu schützen.

Ist bereits der notwendigen Förderpumpe als Aggregat ein Magnetabscheider vorgeordnet, so wird durch die Förderpumpe selbst entstehender Abrieb nicht erfasst und schädigt eventuell nachfolgende Aggregate, wie die Dosierpumpen und Einspritzdüsen. Deshalb wird man insbesondere kurz vor schützenswerten Aggregaten einen Magnetabscheider im Leitungssystem anordnen, um speziell das entsprechende Aggregat vor Verschmutzung durch die Eisenpartikelchen bzw. vor durch diese verursachten Verschleiß zu bewahren.

Die Erfindung ist insbesondere dann wirkungsvoll, wenn das Aggregat einen Magneten enthält.

Dadurch wird erreicht, dass sich die Eisenpartikelchen bereits vor dem Magneten des Aggregates am Magnetabscheider absetzen, damit das Aggregat selbst vor Verunreinigung durch Ablagerungen von Eisenpartikelchen im Bereich des Magnetfeldes geschützt ist.

Besonders vorteilhaft ist diese Erfindung, wenn das Aggregat aus einem Messgerät mit Folgemagneten, insbesondere aus einer Dichtewaage mit Folgemagneten, besteht.

Denn in diesem Falle würden sich ohne vorgeordneten Magnetabscheider Eisenpartikelchen im Bereich des Magnetfeldes ansammeln und durch ihre Ablagerung recht bald die Messergebnisse verfälschen.

Solche Dichtewaagen werden dann eingesetzt, wenn zumindest eine der Komponenten zum Erzielen von Schaumstoffen mit besonderen Eigenschaften mit Gas beladen werden muss. Dichtewaagen sind beispielsweise in der Firmenschrift "Montage- und Betriebsanleitung" 3.2000 (07.95-1) der Josef Heinrichs GmbH & Co. Messtechnik KG, Stolberger Str. 393, D-50933 Köln (Bopp & Reuther Heinrichs Messtechnik), beschrieben. Der Folgemagnet in Form eines Permanentmagneten war bisher ungewollt eine Stelle zum Ansammeln für in der Komponente enthaltene magnetische Eisenpartikelchen. Mit zunehmender Ansammlung wurde die Dichtemessung immer mehr verfälscht. Durch die neuartige Anordnung eines Magnetabscheiders vor der Dichtewaage wird dieser Nachteil ausgeschlossen. Die Anordnung eines Elektromagneten als Folgemagneten in der Dichtewaage ist zwar theoretisch möglich, verursacht aber in der Praxis so große Probleme, dass man bei der heutigen Technik den Einsatz von Permanentmagneten vorzieht. Es ist dabei in diesem Falle gleichgültig, ob für die Begasung ein besonderer Kreislauf mit Begasungsgefäß vorgesehen ist, wie ihn die Firmenschrift Ti 41 "AEROMAT-GU" der oben bereits genannten Hennecke GmbH beschreibt, oder ob die Begasung anderweitig erfolgt, z.B. direkt im Vorratsbehälter oder one-line.

Es bietet sich an, den Magnetabscheider als Einsatzstück zu gestalten, welches Flanschen aufweist und mit Gegenflanschen in der Leitung verschraubt ist. Dadurch lässt sich der gesamte Magnetabscheider insbesondere zur Reinigung recht einfach ausund wieder einbauen.

Als Magnetabscheider lässt sich ein Permanentmagnet oder ein Elektromagnet einsetzen.

Ein Permanentmagnet besitzt einen einfachen Aufbau, hat aber den Nachteil, dass sich die Eisenpartikelchen nur mühevoll entfernen lassen.

Ein elektromagnetischer Abscheider ist zwar aufwendiger aufgebaut, hat aber den Vorteil, dass im ausgeschalteten Zustand die Eisenpartikelchen nicht mehr anhaften und somit leichter zu entfernen sind.

Vorzugsweise weist die der Komponente zugewandte Seite des Magnetabscheiders ein unmagnetisches Abdeckblech auf.

Es versteht sich, dass das Abdeckblech so dicht am Magnetabscheider anliegt bzw. dagegen abgedichtet ist, dass die flüssige Komponente nicht dazwischen eindringen kann. Auf diese Weise wird vermieden, dass die Komponente an der beaufschlagten Fläche des Magnetabscheiders Korrosion verursacht. Als Abdeckblech eignen sich antimagnetische Bleche aus VA-Stahl oder Kunststoffblech. Das Abdeckblech kann mit dem Magnetabscheider fest verbunden sein. Es kann vorzugsweise aber auch derart angeordnet sein, dass es sich zum Reinigen gewünschtenfalls auch allein leicht entfernen lässt.

Gemäß einer besonderen Ausführungsform besitzt der Magnetabscheider Rechteckform und die Zuleitung weist im Bereich des Magnetabscheiders ebenfalls Rechteckform auf.

Auf diese Weise wirkt das Magnetfeld überall gleichmäßig auf den ebenfalls rechteckigen Komponentenstrom ein, wodurch die Abscheidung der Eisenpartikelchen besonders effektiv ist. Die Zuleitung ist in jenem Bereich also als rechteckiger Kanal ausgebildet.

Vorzugsweise ist bei dieser Ausführungsform die Leitung auf den Magnetabscheider gerichtet.

Dadurch wird erreicht, dass eine bessere Abscheidung der Eisenpartikelchen erfolgt, weil sich die Strömungsrichtung der Komponente unmittelbar vor dem Magnetabscheider der Richtung des Magnetfeldes zumindest annähert.

Gemäß einer weiteren besonderen Ausführungsform besteht der Magnetabscheider aus einem eine Leitung mit rundem Querschnitt umgebenden Ringmagneten.

Auch hier wird ein homogenes Magnetfeld erzeugt, weil dieses überall radial zur Achse der Leitung gerichtet ist und gleichmäßig auf die durchströmende Komponente einwirkt.

Bei Verwendung eines Elektromagneten als Magnetabscheider ist es möglich, dahinter in der Leitung einen Mehrwegehahn vorzusehen, und die Partikelchen bei abgeschaltetem Elektromagneten und entsprechender Stellung des Mehrwegehahnes einfach herauszuspülen.

In der Zeichnung ist die neue Vorrichtung beispielhaft und rein schematisch für die Zufuhr einer Komponente dargestellt. Die Zufuhr für die zweite Komponente kann gleichartig aufgebaut sein. Es zeigen:
- Figur 1: die neue Vorrichtung mit einem durch einen Magnetabscheider geschützten Aggregat in einem Geradeaus-System,
- Figur 2: die neue Vorrichtung mit einer durch einen Magnetabscheider geschützten Dichtewaage in einem Rezirkulations-System,
- Figur 3: die Führung der Komponente in Rechteckform im Bereich eines Magnetabscheiders im Schnitt,
- Figur 4: einen Schnitt gemäß Linie A-B in Figur 3,
- Figur 5: einen ringförmig gestalteten und um eine Leitung angeordneten Magnetabscheider im Schnitt und
- Figur 6: einen Schnitt gemäß Linie C-D in Figur 5.

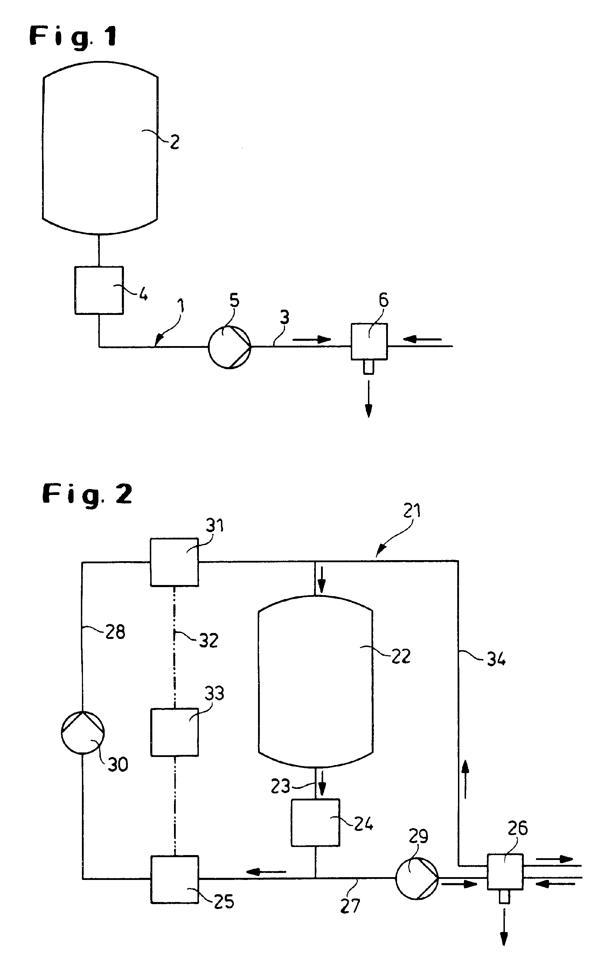

In Figur 1 besteht die Vorrichtung aus einem als sogenanntes Geradeaus-System ausgebildeten Leitungssystem 1 mit Vorratsbehälter 2, von welchem eine Zuleitung 3 über einen Magnetabscheider 4 und über ein als Pumpe 5 ausgebildetes Aggregat zu einem Mischkopf 6 führt. Die Pumpe 5 und der Mischkopf 6 sind hier gegen Verschleiß durch Eisenpartikelchen durch den Magnetabscheider 4 geschützt. Der andere Teil des zum Mischkopf 6 führenden Leitungssystems 1 für die zweite Reaktionskomponente ist in gleicher Weise aufgebaut.

In Figur 2 besteht die Vorrichtung aus einem Leitungssystem 21, in welchem ein Vorratsbehälter 22 angeordnet ist. Von diesem führt eine Leitung 23 über einen Magnetabscheider 24 und verzweigt sich in eine über eine Dosierpumpe 29 zu einem Mischkopf 26 führende Zuleitung 27 sowie in eine wieder zum Vorratsbehälter 22 führende Rücklaufleitung 28, in welcher als schützenswertes Messaggregat eine Dichtewaage 25 angeordnet ist. In dieser Rücklaufleitung 28 folgt dann eine Förderpumpe 30 sowie eine Begasungseinrichtung 31. Diese ist über eine Impulsleitung 32 mit der Dichtewaage 25 verbunden und wird von einem in der Impulsleitung 32 angeordneten Steuergerät 33 in Abhängigkeit der von der Dichtewaage 25 gemessenen Werte betätigt. Der Mischkopf 26 ist als Steuerkolbenmischkopf ausgebildet, so dass er in Ruhestellung die Zuleitung 27 mit einer wieder zum Vorratsbehälter 22 führenden Rezirkulationsleitung 34 verbindet. Der andere Teil des Leitungssystems 21 für die zweite Reaktionskomponente ist in gleicher Weise aufgebaut. Auf die Darstellung der hydraulischen Steuerung des Mischkopfes 6 wurde hier verzichtet, weil sie nicht erfindungswesentlich und außerdem hinlänglich bekannt ist.

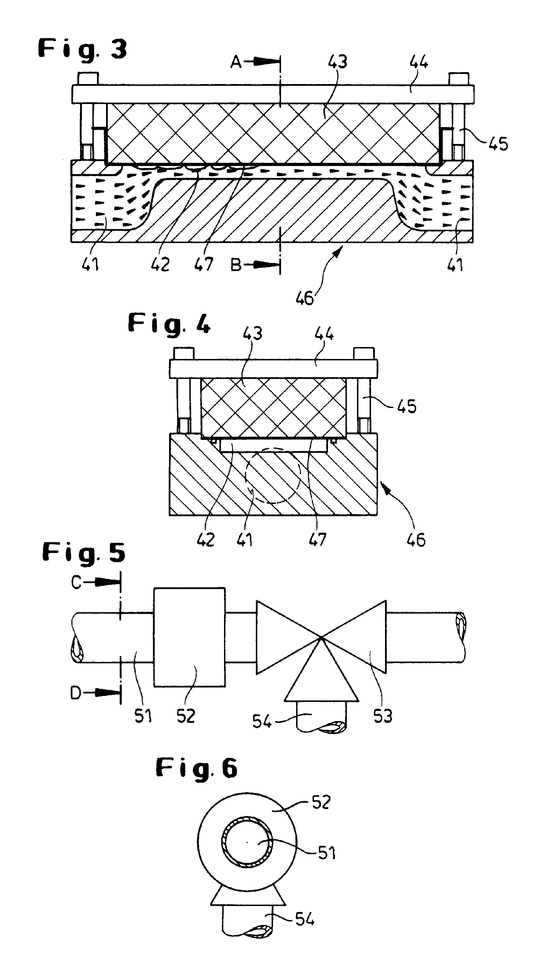

In Figuren 3, 4 verflacht sich eine Zuführungsleitung 41 mit rundem Querschnitt zu einem rechteckigen Kanal 42, wobei sie fast annähernd in Richtung des Magnetfeldes eines als Permanentmagneten 43 ausgebildeten Magnetabscheiders gerichtet ist. Dieser Permanentmagnet 43 begrenzt den rechteckigen Kanal 42. Er ist mittels einer Spannplatte 44 und Schrauben 45 an jenem Block 46 lösbar befestigt, in welchem der rechteckförmige Kanal 42 angeordnet ist. Hinter dem Permanentmagneten 43 geht der rechteckige Kanal 42 wieder in die Zuleitung 41 mit rundem Querschnitt über. Die zum Kanal 42 weisende Fläche des Magnetabscheiders 43 ist mit einem unmagnetischen Abdeckblech 47 kaschiert und dagegen abgedichtet. Der Magnetabscheider 43 ist samt Abdeckblech 47 zum Reinigen ausbaubar.

In Figuren 5, 6 besitzt die gesamte Zuführungsleitung 51 durchgehend runden Querschnitt. Sie ist von einem Elektromagneten 52 als Magnetabscheider umgeben. Über einen in der Leitung 51 nachgeordneten Mehrwegehahn 53 lassen sich bei abgeschaltetem Elektromagneten 52 und entsprechender Stellung des Mehrwegehahnes 53 die abgeschiedenen Eisenpartikelchen über einen Auslassstutzen 54 herausspülen.

## Patentansprüche

1. Vorrichtung zum Konditionieren und/oder zum Herstellen eines Massivstoff oder Schaumstoff bildenden Reaktionsgemisches aus mindestens zwei fließfähigen Reaktionskomponenten und gegebenenfalls Zusatzkomponenten, bestehend aus Vorratsbehältern (2, 22) und einem Leitungssystem (1, 21), in welchem Aggregate (5, 25, 29, 30, 31) angeordnet sind und welches zu einem Mischkopf (6, 26) führt, **dadurch gekennzeichnet, dass** in dem Leitungssystem (1, 21) zumindest vor einem vor Eisenpartikelchen schützenswerten Aggregat (5, 25, 29, 30, 31) bzw. Mischkopf (6, 26) ein Magnetabscheider (4, 24) angeordnet ist.

2. Vorrichtung nach Anspruch 1, **dadurch gekennzeichnet, dass** das Leitungssystem aus einem Geradeaus-System (1) besteht.

3. Vorrichtung nach Anspruch 1, **dadurch gekennzeichnet, dass** das Leitungssystem aus einem Rezirkulations-System (21) besteht.

4. Vorrichtung nach einem der Ansprüche 1, 2 oder 3, **dadurch gekennzeichnet, dass** der Magnetabscheider (4, 24) vor dem in Strömungsrichtung ersten Aggregat (5, 25) angeordnet ist.

5. Vorrichtung nach einem der Ansprüche 1 bis 4, **dadurch gekennzeichnet, dass** das Aggregat (25) einen Magneten enthält.

6. Vorrichtung nach Anspruch 5, **dadurch gekennzeichnet, dass** das Aggregat aus einem Messgerät (25) mit einem Folgemagneten besteht.

7. Vorrichtung nach Anspruch 6, **dadurch gekennzeichnet, dass** das Messgerät aus einer Dichtewaage (25) mit Folgemagneten besteht.

8. Vorrichtung nach einem der Ansprüche 1 bis 7, **dadurch gekennzeichnet, dass** die der Reaktionskomponente zugewandte Seite des Magnetabscheiders (43) ein unmagnetisches Abdeckblech (47) aufweist.

9. Vorrichtung nach einem der Ansprüche 1 bis 8, **dadurch gekennzeichnet, dass** der Magnetabscheider (43) Rechteckform besitzt und dass die Zuleitung (42) im Bereich des Magnetabscheiders (43) ebenfalls Rechteckform aufweist.

10. Vorrichtung nach einem der Ansprüche 1 bis 9, **dadurch gekennzeichnet, dass** die Zuleitung (41) auf den Magnetabscheider (43) gerichtet ist.

11. Vorrichtung nach einem der Ansprüche 1 bis 10, **dadurch gekennzeichnet, dass** der Magnetabscheider aus einem eine Leitung (51) mit rundem Querschnitt umgebenden Ringmagneten (52) besteht.
